# EUROPÄISCHE PATENTSCHRIFT

(11) **EP 0 473 172 B1**
(45) Veröffentlichungstag und Bekanntmachung des Hinweises auf die Patenterteilung: **15.10.1997**
(21) Anmeldenummer: 91114589.4
(22) Anmeldetag: 29.08.1991
(51) Int. Cl.: H02J 15/00, H01F 6/00

(54) **Supraleitender magnetischer Energiespeicher**
Superconducting magnetic energy storage device
Dispositif de stockage d'energie à aimants supraconducteurs

(30) Priorität: 31.08.1990 DE 4027546
(43) Veröffentlichungstag der Anmeldung: 04.03.1992
(73) Patentinhaber: Daimler-Benz Aktiengesellschaft, 70546 Stuttgart (DE)
(72) Erfinder: Voigt, Heinz, Dr. rer. nat., W-6000 Frankfurt/Main 70 (DE)
(74) Vertreter: Fröhling, Werner Otto, Dr.

(56) Entgegenhaltungen:
- DE-A- 3 819 542
- FR-A- 1 437 489
- GB-A- 2 021 881
- US-A- 4 032 959
- VDI BERICHTE Nr. 733, 1989, SS 173-187; H.-E. VOLLMAR et al.: 'Konzepte für magnetische Grossspeicher'

## Beschreibung

Die Erfindung bezieht sich auf einen supraleitenden magnetischen Energiespeicher mit grosser Speicherkapazität.

Zum zeitlichen Lastausgleich in der elektrischen Energieversorgung werden neben anderen Systemen, z.B. Pumpspeicheranlagen, magnetische Energiespeicher in Betracht gezogen. Seit den 70er Jahren sind entsprechende Studien für technisch realisierbare Anlagen durchgeführt worden. Prototypen mit kleinem Speichervermögen sind in der Erprobung.

Bei den magnetischen Energiespeichern handelt es sich um Wicklungsanordnungen mit hoher Selbstinduktivität, die mit einem (zeitlich veränderlichen) Ladestrom "aufgeladen" werden und aus denen bedarfsweise die Energie durch einen Entladestrom entnommen wird.

Die Energie des magnetischen Feldes ergibt sich aus der Beziehung W = 1/2 L · I² worin mit L die Selbstinduktivität der Spule und mit I der Strom bezeichnet sind. Dem magnetischen Feld kann daher durch einen z.B. zeitveränderlichen Entladestrom Iₑ die Energie 1/2 L · Iₑ² entnommen werden. Diese Art der Energiespeicherung ist nur wirtschaftlich, wenn die Wicklung der Induktivität keine ohmschen Verluste besitzt. Daher werden magnetische Speicheranlagen grundsätzlich mit supraleitenden Wicklungen projektiert und ausgeführt. Technische Konzepte und Probleme solcher supraleitender Energiespeicher (superconductive magnetic energy storage, SMES) sind in IEEE Trans. MAG 25 (1989) 2, S. 750-758 sowie in VDI Berichte 733 (1989), S. 173-187, dargestellt.

Aus der GB-A-20 21 881 ist ein gattungsgemäßer supraleitender magnetischer Energiespeicher bekannt, bei dem die Spulen gleich ausgebildet und hintereinander geschaltet, also von gleich großen Strömen durchflossen sind. Um den Energieverlust der gespeicherten Energie durch Entladungen zu minimieren, und um den Verbrauch von flüssigem Helium zu reduzieren, ist vorgesehen, daß jede supraleitende Spule mit einem Halbleiter-Schutzschalter verbunden ist, der einen lokal geschlossen Kreis herstellen kann. Die Anordnung der Spulen im einzelnen wird nicht angesprochen.

Die supraleitende Wicklung eines magnetischen Speichers wird entweder als Zylinderspule (Solenoid) oder als Ringsspule (Toroid) ausgeführt. Letztere benötigt wesentlich mehr Leitermaterial, ausserdem eine aufwendigere Abstützung der Wicklung als ein Solenoid gleichen Speichervermögens. Die Toroidanordnung erzeugt im Aussenraum kein störendes magnetisches Streufeld. Dieser Vorteil fehlt bei der Solenoidanordnung, die i.a. wegen ihrer gegenüber dem Toroid niedrigeren Kosten für Grosspeicher bevorzugt wird.

Eine für den praktischen Einsatz brauchbare Speicherkapazität lässt sich nur mit Spulen von relativ grossem Durchmesser, z.B. einigen hundert Metern bzw. einem Kilometer, erreichen. In diesen Spulen kann Energie in der Grössenordnung von GWh gespeichert werden. Das von derartigen Zylinderspulen erzeugte Streufeld hat noch in grösserer Entfernung von der Spule eine beträchtliche Stärke. Erst in einigen km Entfernung von der Spule tritt eine Feldstärke in der Grössenordnung des Erdmagnetfelds auf. Ein so hohes Streufeld kann Störungen der elektronischen Anlagen von Fahrzeugen oder Flugzeugen hervorrufen. Um diese Störungen zu vermeiden, sind aufwendige Abschirmmassnahmen notwendig. Beispielsweise sind grossräumige Kompensationsspulen zur Abschirmung der störenden Magnetfelder vorgeschlagen worden.

Der Erfindung liegt die Aufgabe zugrunde, einen supraleitenden magnetischen Energiespeicher zu entwickeln, der bei grosser Speicherkapazität auf der Grundlage von Zylinderspulen streufeldarm ist.

Die Aufgabe wird erfindungsgemäss dadurch gelöst, dass eine Anzahl von supraleitenden Zylinderspulen vorgesehen ist, die so nebeneinander angeordnet sind, dass die Streufelder einander benachbarter Zylinderspulen entgegengesetzten Richtungssinn aufweisen. Die Streufelder benachbarter, gleich ausgebildeter Zylinderspulen heben sich dabei zum grossen Teil auf, so dass nach aussen hin ein geringes Streufeld vorhanden ist. Grosse Aufwendungen für eine Abschirmung sind nicht notwendig. Die Streufelder mit einander engegengesetzten Richtungen in benachbarten Zylinderspulen können durch Umkehr des Wickelsinns oder bei gleichem Wickelsinn durch Umkehr der Stromrichtung erzeugt werden.

Vorzugsweise ist die Stromstärke in den gleich ausgebildeten Zylinderspulen gleich gross, da hierdurch gleiche Streufelder entstehen. Die Zylinderspulen können jeweils über eigene Transformatoren und Stromrichter mit einem elektrischen Netz verbunden sein, d.h. die Zylinderspulen sind in Parallelschaltung an das Netz gelegt. Es ist aber auch möglich, alle oder eine Anzahl Spulen in Serie über einen Stromrichter und einen Transformator an ein Netz anzuschliessen.

Insbesondere sind die Spulen nach Art einer Matrix in einer Ebene nebeneinander aufgestellt und wechselweise schachbrettartig von gegensinnig fliessenden Strömen beaufschlagt. Das magnetische Streufeld in senkrechter Richtung zur Ebene der Zylinderspulen nimmt dabei mit zunehmender Entfernung stark ab.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:
- Fig. 1: das magnetische Streufeld einer 5,25 GWh-Zylinderspule (flaches Solenoid) mit 1 km Durchmesser,
- Fig. 2: die Gleichfeldlinien im Aussenraum der Speicherspule nach Fig. 1 im Umfeld von +/- 5 km radial und axial,
- Fig. 3: eine Spulenanordnung gemäss der Erfindung mit Reduzierung des magnetischen Streufelds im Umfeld.

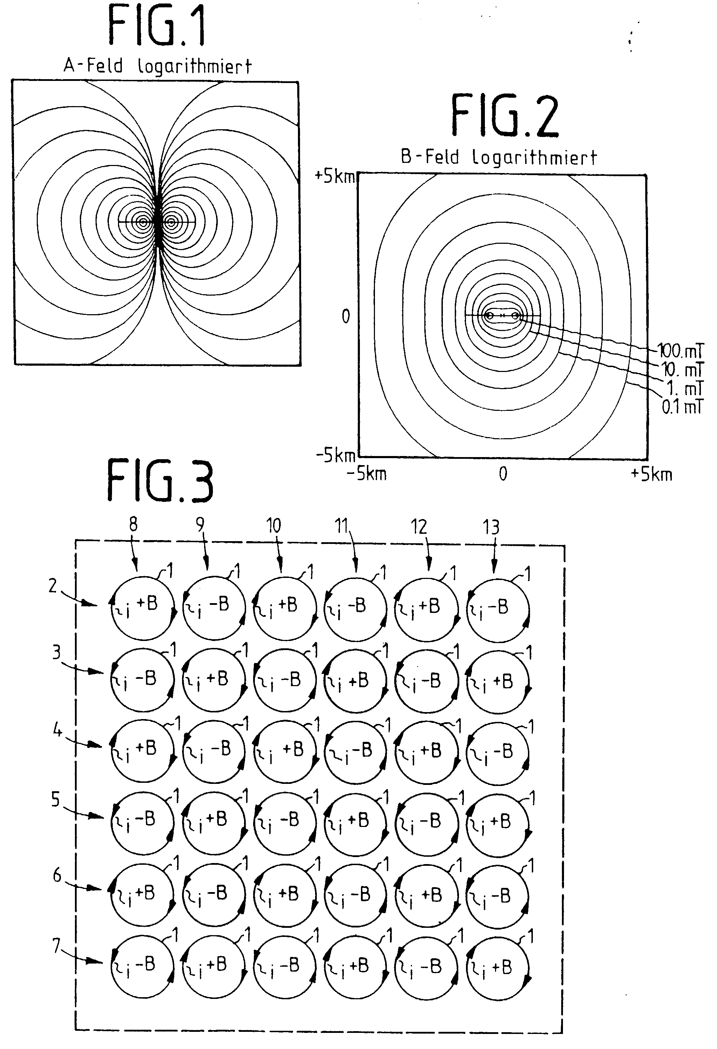

Das in Fig. 1 dargestellte Streufeld einer Zylinderspule entspricht in grösserer Entfernung dem eines magnetischen Dipols, dessen Feldstärke umgekehrt proportional der dritten Potenz des Abstands von der Zylinderspule ist.

Wie Fig. 2 zu entnehmen ist, kann das magnetische Streufeld grossvolumiger Speicherspulen selbst in Abständen der Grössenordnung km noch Werte aufweisen, die z.B. für den Flugverkehr oder bodenständige Signaleinrichtungen in der Umgebung störend sind. Um solche Störungen zu vermeiden, sind verschiedentlich Systeme zur teilweisen Kompensation des Streufelds grosser Zylinderspulen vorgeschlagen worden. Eine derartige Massnaheme ist in VDI Ber. 733, S. 181, beschrieben: Konzentrisch zur Speicherspule wird eine oder werden mehrere Abschirmspulen mit grösserem Durchmesser als die Speicherspule angeordnet und mit gegensinniger Erregung betrieben.

Zur raumsparenden Kompensation des magnetischen Streufelds ist die in Fig. 3 dargestellte Anordnung einer magnetischen Grosspeicheranlage vorgesehen: Die Speicheranlage besteht aus n gleichartigen Zylinderspulen 1, die in einer Ebene nach Art einer Matrix in Zeilen 2, 3, 4, 5, 6, 7 und Spalten 8, 9, 10, 11, 12, 13 angeordnet sind. Die Zylinderspulen 1 sind wechselweise schachbrettartig mit gegensinnig fliessenden Strömen i beaufschlagt. Auf diese Weise wird erreicht, dass das magnetische Streufeld in senkrechter Richtung zur Ebene der Speicherspulen sowie in dieser Ebene mit wachsendem Abstand von den Spulen rasch abnimmt.

Für den Abfall des Feldes ist in erster Linie der Durchmesser der Einzelspulen massgebend. Dieser ist, bedingt durch die modulare Aufteilung der Speicheranlage, nur ein Bruchteil des Durchmessers einer äquivalenten grossen Einzelspule. Die Aufteilung scheint den Aufwand an Leitermaterial im Vergleich zu der äquivalenten Anordnung mit einer grossen Einzelspule zu erhöhen. Dies lässt sich jedoch vermeiden, wenn jede modulare Spule ein grösseres Verhältnis von Höhe zu Durchmesser erhält als die äquivalente grosse Zylinderspule, die in vielen Fällen einem sehr kleinen Verhältnis von Höhe zu Druchmesser ausgelegt wird, wie in IEEE MAG25 ausgeführt. Bei der Unterteilung der Speicheranlage in zahlreiche modulare Wicklungen lässt sich weiterhin der Kostenvorteil durch Serienfertigung ausnutzen.

Die einzelnen Zylinderspulen 1, die z.B. aus Niob-Titan bestehen, können einzeln über Stromrichter und Transformatoren mit einem elektrischen Netz verbunden sein. Es ist auch möglich, mehrere oder alle Zylinderspulen 1 in Serie anzuordnen und über einen gemeinsamen Stromrichter nebst Transformator an ein elektrisches Netz anzuschliessen.

In Fig. 3 sind die Ströme i in den verschiedenen Zylinderspulen 1 mit ihren Flussrichtungen eingetragen. Die durch die Zylinderspulen 1 verlaufenden Magnetfelder sind durch ihre Flussdichten B gekennzeichnet. Die Richtungen der Magnetfelder sind durch Vorzeichen vor den Flussdichten B angegeben.

## Patentansprüche

1. Supraleitender magnetischer Energiespeicher mit großer Speicherkapazität, mit supraleitenden Zylinderspulen, welche gleich ausgebildet und von gleich großen Strömen durchflossen sind,
**dadurch gekennzeichnet,**
daß sie so nebeneinander angeordnet sind, daß die Streufeider einander benachbarter Zylinderspulen entgegengesetzten Richtungssinn aufweisen.

2. Energiespeicher nacn Anspruch 1,
**dadurch gekennzeichnet,**
dass die Zylinderspulen (1) nach Art einer Matrix in einer Ebene nebeneinander aufgestellt und wechselweise schachbrettartig von gegensinnig fliessenden Strömen (i) beaufschlagt sind.

3. Energiespeicher nach Anspruch 1 oder 2,
**dadurch gekennzeichnet,**
dass Gruppen von Zylinderspulen in Reihe geschaltet sind und dass jede Gruppe über einen gemeinsamen Stromrichter und einen Transformator an ein elektrisches Netz angeschlossen ist.

## Claims

1. Superconducting magnetic energy store with large storage capacity, comprising superconducting cylinder coils which are constructed identically and flowed through by currents of equal size, characterised thereby that they are so arranged adjacent to one another that the stray fields of mutually adjacent cylinder coils have opposed senses of direction.

2. Energy store according to claim 1, characterised thereby that the cylinder coils (1) are set up adjacent to one another in the manner of a matrix in one plane and are alternately acted on in chequerboard-like manner by currents (i) flowing in opposite sense.

3. Energy store according to claim 1 or 2, characterised thereby that groups of cylinder coils are connected in series and that each group is connected to an electrical mains by way of a common rectifier and a transformer.

## Revendications

1. Dispositif de stockage d'énergie à aimants supraconducteurs à grande capacité de stockage, équipé de bobines cylindriques supraconductrices, qui sont réalisées identiquement et sont parcourues par des courants de même intensité, caractérisé en ce que lesdites bobines sont juxtaposées de sorte que les champs de dispersion de bobines cylindriques adjacentes soient de sens opposés.

2. Dispositif de stockage d'énergie selon la revendication 1, caractérisé en ce que les bobines cylindriques (1) sont juxtaposées de façon matricielle dans un plan et sont alimentées alternativement en damier par des courants (i) de sens opposés.

3. Dispositif de stockage d'énergie selon la revendication 1 ou 2, caractérisé en ce que des groupes de bobines cylindriques sont montés en série et en ce que chaque groupe est raccordé à un réseau électrique par l'intermédiaire d'un redresseur de courant et d'un transformateur communs.
